# EUROPÄISCHE PATENTSCHRIFT

(11) **EP 2 718 041 B1**
(45) Veröffentlichungstag und Bekanntmachung des Hinweises auf die Patenterteilung: **12.10.2016**
(21) Anmeldenummer: 12717117.1
(22) Anmeldetag: 24.04.2012
(51) Int. Cl.: B22D 11/12, B22D 11/128, B22D 11/20, G01K 1/02, G01K 11/32

(54) **STRANGFÜHRUNGSSEGMENT EINER STRANGFÜHRUNG EINER STRANGGIESSANLAGE UND VERFAHREN ZUM BETREIBEN EINES STRANGFÜHRUNGSSEGMENTS**
STRAND GUIDE SEGMENT OF A STRAND GUIDE OF A CONTINUOUS CASTING INSTALLATION AND METHOD FOR OPERATING A STRAND GUIDE SEGMENT
SEGMENT DE CORSET DE GUIDAGE D'UNE INSTALLATION DE COULÉE CONTINUE ET PROCÉDÉ PERMETTANT DE FAIRE FONCTIONNER UN SEGMENT DE CORSET DE GUIDAGE

(30) Priorität: 07.06.2011 DE 102011104128; 09.12.2011 DE 102011088127
(43) Veröffentlichungstag der Anmeldung: 16.04.2014
(73) Patentinhaber: SMS group GmbH, 40237 Düsseldorf (DE)
(72) Erfinder: LIEFTUCHT, Dirk, 48739 Legden (DE); HÜLLEN, Ina, 40625 Düsseldorf (DE)
(74) Vertreter: Klüppel, Walter
(86) Internationale Anmeldenummer: PCT/EP2012/057462
(87) Internationale Veröffentlichungsnummer: WO 2012/167989

(56) Entgegenhaltungen:
- EP-A1- 1 475 169
- EP-A1- 1 849 539
- WO-A1-01/91942
- WO-A1-2009/118222
- WO-A2-2011/023377
- DE-A1- 10 236 033
- DE-A1-102006 027 066
- DE-A1-102008 050 393
- DE-A1-102008 060 032
- DE-A1-102009 060 639
- DE-A1-102010 008 480
- DE-C1- 10 039 015
- JP-A- 8 145 810
- MÖRWALD K ET AL: "ROLL LOAD MEASUREMENTS ON THIN SLAB CASTER FOR LIQUID CORE DETECTION", IRONMAKING & STEELMAKING: PROCESSES, PRODUCTS AND APPLICATIONS, MANEY PUBLISHING, UNITED KINGDOM, Bd. 25, Nr. 2, 1. Januar 1998 (1998-01-01) , Seiten 159-162, XP002320897, ISSN: 0301-9233
- IIDA O ET AL: "Expansion of measuring range for a fiber-optic distributed temperature sensor and applications to commercial plants", INSTRUMENTATION AND MEASUREMENT TECHNOLOGY CONFERENCE, 1994. IMTC/94. CONFERENCE PROCEEDINGS. 10TH ANNIVERSARY. ADVANCED TECHNOLOGIES IN I & M., 1994 IEEE HAMAMATSU, JAPAN 10-12 MAY 1994, NEW YORK, NY, USA,IEEE, 10. Mai 1994 (1994-05-10), Seiten 265-268, XP010122109, DOI: 10.1109/IMTC.1994.352077 ISBN: 978-0-7803-1880-9
- OZGU ET AL: "Continuous caster instrumentation: State-of-the-art review", CANADIAN METALLURGICAL QUARTERLY, PERGAMON, CA, Bd. 35, Nr. 3, 1. Juli 1996 (1996-07-01), Seiten 199-223, XP027399508, ISSN: 0008-4433 [gefunden am 1996-07-01]

## Beschreibung

Die Erfindung betrifft ein Strangführungssegment einer Strangführung einer Stranggießanlage. Das Strangführungssegment weist mindestens einen Trägerrahmen auf, an dem eine Anzahl Strangführungsrollen drehbar gelagert ist, wobei in dem Trägerrahmen Mittel zur Erfassung der Dehnung und/oder der Temperatur des Trägerrahmens angeordnet sind. Typischerweise umfasst das Strangführungssegment zwei Trägerrahmen, einen Oberrahmen und einen Unterrahmen, mit einander zugewandten gegenüberliegenden Rollen zwischen denen ein zuvor in einer Kokille gegossener Metallstrang geführt wird. Der Oberrahmen ist der Oberseite des Metallstrangs zugeordnet; der Unterrahmen ist der Unterseite des Metallstrangs zugeordnet. Des weiteren betrifft die Erfindung ein Verfahren zum Betreiben eines Strangführungssegments.

Es ist bekannt, Strangführungssegmente der genannten Art mit Messelementen auszustatten, um die mechanischen und thermischen Belastungen aufnehmen zu können, denen sie im Betrieb ausgesetzt sind. Insbesondere ist es wichtig zu wissen, wie hoch die Dehnungen im Segment sind, um unter Zugrundelegung derselben gegebenenfalls der Auffederung des Segments durch die Rollenkräfte gegenregeln zu können.

Demgemäß werden nach vorbekannten Lösungen Messsensoren an den relevant erscheinenden Stellen des Segments platziert, wobei es sich zur Erfassung von Dehnungen um Dehnmessstreifen handelt, die am Segment angebracht werden. Genauso können auch Temperatursensoren platziert werden, um die thermische Belastung des Segments erfassen zu können. Hierfür geeignete Temperatursensoren bzw. Sensorelemente sind z.B. aus DE 10 2009 060 639 A1 bekannt.

DE 100 39 015 C1 zeigt ein Strangführungssegment nach dem Oberbegriff von Anspruch 1 bzw. Anspruch 2.

Für eine hinreichende Aussage über die Belastung des Segments ist folglich unter Umständen eine größere Anzahl von Sensoren anzuordnen, was einen entsprechenden Aufwand anbelangt, insbesondere hinsichtlich der dann erforderlichen Verdrahtung.

Neben dieser nachteiligen Gegebenheit ist es auch als negativ zu verbuchen, dass die Dehnmessstreifen selber hohen Belastungen ausgesetzt sind, so dass die Gebrauchsdauer dieser Art von Sensoren beschränkt ist. Dies führt nachteilig zu einem hohen Instandhaltungsaufwand.

Der Erfindung liegt daher die Aufgabe zugrunde, ein Strangführungssegment der eingangs genannten Art so fortzubilden, dass diesbezüglich Verbesserungen erzielt werden können. Demgemäß soll es mit weniger Aufwand möglich sein, das Segment mit einer dauerhaften Sensorik auszustatten. Hiermit soll es möglich werden, ein verbessertes und genaueres Bild von der mechanischen und thermischen Belastungssituation zu gewinnen. Dabei soll eine kontinuierliche und präzise Überwachung der Dehnungen und Temperaturen des Segments möglich sein, die sich kostengünstig realisieren lässt. Es soll insbesondere auch möglich werden, anhand gemessener Daten auf die Biegelinie eines Strangführungssegments zu schließen, um hieraus Rückschlüsse ziehen zu können bzw. Maßnahmen einleiten zu können, um Abweichungen von einer Ideallinie zu eliminieren.

Die Lösung dieser Aufgabe durch die Erfindung ist dadurch gekennzeichnet, dass die Mittel zur Erfassung der Dehnung und/oder der Temperatur des Trägerrahmens des Segments mehrere Lichtwellenleiter umfassen, die in Richtung der Achse der Strangführungsrollen im Trägerrahmen angeordnet und in Strangförderrichtrung voneinander - vorzugsweise äquidistant - beabstandet sind. Zusätzlich sind mehrere Lichtwellenleiter vorgesehen, die in Strangförderrichtung im Trägerrahmen angeordnet und in Richtung der Achse der Strangführungsröllen voneinander - wiederum vorzugsweise äquidistant - beabstandet sind. Demgemäß ergibt sich in vorteilhafter Weise, dass eine Anzahl Lichtwellenleiter im Trägerrahmen matrixartig angeordnet sind.

Aus den Dehnungen des Lichtwellenleiters kann auf die Biegung des Bauteils geschlossen werden. Anders ausgedrückt: Die messbaren Ist-Dehnungen des Lichtwellenleiters repräsentieren die Ist-Biegelinie des Bauteils, hier insbesondere des Strangführungssegmentes, entlang des Lichtwellenleiters. Eine Mehrzahl von an dem Bauteil, z.B. in Matrixform angebrachten Lichtwellenleitern ermöglicht die Erfassung der Ist-Dehnungsverteilung und damit zumindest näherungsweise auch die Ermittlung der Ist-Biegeverteilung über dem Bauteil.

Durch die Einbringung von Lichtwellenleitern in den Trägerrahmen des Strangführungssegments können Temperaturen und Spannungen des Rahmens als Temperatur- bzw. Spannungsprofil über die Bauteiloberfläche für eine Vielzahl von Punkten gemessen werden. Die vorgeschlagene Ausstattung ermöglicht also eine Darstellung der thermischen bzw. mechanischen Belastung des Rahmens über seine Oberfläche im jeweiligen Betriebszustand.

Die Erfindung betrifft auch ein Verfahren zum Betreiben eines Strangführungssegments einer Strangführung einer Stranggießanlage. Das Strangführungssegment hat einen Trägerrahmen, in dem eine Anzahl Strangführungsrollen gelagert ist, wobei in dem Trägerrahmen Mittel zur Erfassung der Dehnung des Trägerrahmens angeordnet sind. Um insgesamt eine optimalen Spannungs- bzw. Dehnungszustand im Strangführungssegment zu erreichen, sieht das Verfahren vor, dass die Mittel zur Erfassung der Dehnung des Trägerrahmens mehrere im oder am Trägerrahmen angeordnete Lichtwellenleiter umfassen, die sich jeweils in Richtung der Achse der Strangführungsrolle bzw. senkrecht hierzu in Strangförderrichtung erstrecken und untereinander eine matrixartige Anordnung von Lichtwellenleitern bilden, und dass eine Vielzahl von Stellelementen, insbesondere ein hydraulisches Kolben-Zylinder-Element, vorgesehen sind, die am Trägerrahmen bzw. an verschiedenen Orten des Strangführungssegments angreifen, um eine äußere Kraft auf den Trägerrahmen auszuüben, wobei durch den Lichtwellenleiter die Dehnungen des Trägerrahmens am Ort des Angriffs der Stellelemente ermittelt werden,
wobei das Verfahren die Schritte aufweist:
a) Messen der Dehnung des Trägerrahmens an einer Anzahl Stellen des Trägerrahmens mittels der Lichtwellenleiter und Zuleitung der gemessenen Werte an eine Regeleinrichtung;
b) Vergleich der gemessenen Werte der Dehnung mit in der Regeleinrichtung gespeicherten Werten und Ermittlung einer Abweichung zwischen gemessenen und gespeicherten Werten;
c) Ansteuern des mindestens einen Stellelements durch die Steuerungseinrichtung, so dass die ermittelte Abweichung vermindert wird.

Die Schritte a) bis c) werden dabei bevorzugt wiederholt durchgeführt, bis die ermittelte Abweichung unter einem vorgegebenen Höchstwert liegt (vorzugsweise bei Null). Demgemäß wird also eine ständige Regelung der ermittelten Abweichung vorgenommen, um diese zu minimieren.

Im Zusammenhang mit der Vielzahl von Stellelementen können bevorzugt mindestens drei Stellelemente vorgesehen sein, die an verschiedenen Orten des Strangführungssegments angreifen, wobei durch den oder die Lichtwellenleiter die Dehnungen des Trägerrahmens am Ort des Angriffs der Stellelemente ermittelt werden. Die Regelung der Stellelemente durch die Regeleinrichtung erfolgt dabei bevorzugt so, dass alle Dehnungen an den Stellen des Angriffs der Stellelemente unter einem vorgegebenen Höchstwert liegen.

Die ermittelten Ist-Werte ermöglichen eine Aussage über die jeweils aktuelle Belastung des Segments oder die Kräfteverteilung auf / an dem Segment. Die Ist-Werte können - bei geeigneter Anbringung am Segment - auch die jeweils aktuelle Torsionsbelastung des Segmentes repräsentieren. Durch einen Vergleich der Ist-Werte mit jeweils vorgegebenen Schwellenwerten kann auf einfache Weise eine eventuelle Überbelastung des Strangführungssegmentes festgestellt werden.

Die ermittelten Ist-Werte können - wie erläutert - auch Gegenstand einer Regelung sein, die von einer Regeleinrichtung (Steuerungseinrichtung) durchgeführt wird. Dazu werden von der Regeleinrichtung die Ist-Werte mit jeweils vorgegebenen Soll-Werten vergleichen und im Falle einer festgestellten Regelabweichung wird nach Maßgabe der Regelabweichung ein Stellglied, z.B. ein Stellzylinder zum Anstellen einer Rolle oder zum Anstellen eines Rollenträgerrahmens des Strangführungssegmentes, so angesteuert, dass die Regelabweichung möglichst wieder zu Null wird. Auf diese Weise können insbesondere die Ist-Dehnung und die Ist-Biegung der vorgegebenen Soll-Dehnung bzw. der vorgegebenen Soll-Biegung angepasst werden.

Die Begriffe Dehnung und Biegung stehen im Rahmen der vorliegenden Beschreibung synonym auch für Dehnungsverteilung bzw. Biegungsverteilung und umgekehrt.

Konkret kann auf diese Weise zum Beispiel einer durch den ferrostatischen Druck des im Innern noch flüssigen Metallstrangs hervorgerufenen Auffederung (Aufwölbung) des Metallstrangs gezielt entgegengewirkt werden. Dazu werden die durch die Auffederung auf die Rollen des Strangführungssegmentes übertragenen erhöhten Ist-Kräfte erfasst, mit vorgegebenen Soll-Kräften verglichen und bedingten Ist-Kräfte der durch die über die Rollen übertragenen Kräften, gezielt entgegenzuwirken, was durch eine entsprechende Ansteuerung der Stellzylinder erfolgen kann, mit denen die Strangführungsrollen positioniert wird.

Der Lichtwellenleiter kann zur Messung der Temperatur zumindest abschnittsweise locker / lose in einem Hüllrohr verlegt angeordnet sein, wobei das Hüllrohr im Trägerrahmen festgelegt ist. Für die Messung der Temperatur ist es wichtig, dass der Lichtwellenleiter nur lose verlegt ist, damit er sich ungehindert ausdehnen kann. Eine Dehnung des Lichtwellenleiters repräsentiert dann nur eine Änderung der Temperatur, nicht aber eine Dehnung / Biegung des Bauteils. Das Hüllrohr kann dabei in einer nutförmigen Ausnehmung im Trägerrahmen angeordnet werden. Die Festlegung des Hüllrohrs in der nutförmigen Ausnehmung kann durch einen Verguss mit einem Harzmaterial oder Klebstoff bewerkstelligt sein. Dabei ist bevorzugt vorgesehen, dass ein Epoxidharz oder ein UVaushärtender Klebstoff eingesetzt wird. Das Harzmaterial bzw. der Klebstoff kann mit einem hitzebeständigen Silikonmaterial versiegelt sein.

Der Lichtwellenleiter sollte zur Messung einer Dehnung des Trägerrahmens zumindest abschnittsweise direkt mit dem Trägerrahmen oder mit einem am Trägerrahmen befestigten Bauteil verbunden sein (direkte Messung). Möglich ist es aber auch, dass der Lichtwellenleiter an zwei beabstandeten Stellen direkt mit dem Trägerrahmen oder dem am Trägerrahmen befestigten Bauteil verbunden ist (integrative Messung); die beiden Stellen sind bevorzugt in einem Abstand zwischen 1 cm und 1 m angeordnet.

Der Lichtwellenleiter kann am Trägerrahmen bzw. an dem am Trägerrahmen befestigten Bauteil in vorgespanntem Zustand befestigt sein, um sowohl Druckals auch Zugspannungen fehlerfrei erfassen zu können.

Um genaue thermische Messungen mit dem Lichtwellenleiter durchführen zu können, ist es vorteilhaft, dass der Lichtwellenleiter oder das Hüllrohr, das den Lichtwellenleiter umgibt, eng an dem Trägerrahmen anliegt, und zwar möglichst ohne (isolierenden) Luftzwischenraum. Der genannte Verguss stellt dies sicher. Damit auch die Dehnungen (Spannungen) im Trägerrahmen erfasst werden können, ist es vorteilhaft, wenn der Lichtwellenleiter - jedenfalls an der Messstelle ohne Schutzrohr - mit dem Trägerrahmen bzw. dem an diesem angebrachten Bauteil fest verbunden ist.

Die vorgeschlagene Ausgestaltung bietet also die Möglichkeit, Spannungszustände in der gesamten gemessenen Ebene zu erfassen und so die mechanische Belastung der Bauteile genau zu erfassen.

Die Technologie der Messung von Temperaturen und Dehnungen bzw. Spannungen ist als solche bekannt (auch unter der Bezeichnung "optischer Dehnmessstreifen"), so dass insoweit auf den Stand der Technik verwiesen wird. Grundsätzlich bekannt ist es auch, zur Messung von thermischen Größen Lichtwellenleiter einzusetzen, was beispielsweise in der WO 2004/015349 A2 und in der WO 2007/079894 A1 beschrieben ist.

Die Lichtwellenleiter stehen hierzu mit einer Auswerteeinheit in Verbindung, in der die Spannungsverteilung bzw. die Temperaturverteilung im Trägerrahmen des Stranggießsegments ermittelt werden kann.

Zur Messung der Temperatur wird der Lichtwellenleiter im genannten Hüllrohr mit einem Außendurchmesser von ca. 1 mm und einem Innendurchmesser von ca. 0,6 mm untergebracht und im Hüllrohr verlegt. Das Hüllrohr ist bevorzugt aus Edelstahl gefertigt und erlaubt eine spannungsfreie Lagerung des Lichtwellenleiters, d. h. der Glasfaser. Die Erwärmung des Lichtwellenleiters erzeugt eine Wärmedehnung und ändert somit den Gitterabstand des Faser-Bragg-Gitters (s. unten).

Zur Dehnungsmessung wird das Hüllrohr vom Lichtwellenleiter entfernt und der Leiter direkt mit der zu vermessenden Stelle verbunden. Wie bereits erwähnt, kann der Lichtwellenleiter direkt auf den Trägerrahmen bzw. auf einem am Rahmen angeordneten Bauteil, das den gleichen Spannungen ausgesetzt ist, aufgebracht werden (direkte Messung) oder zwei Stellen des Lichtwellenleiters, die zwischen 1 cm und 1 m voneinander beabstandet sind, werden auf dem Trägerrahmen bzw. dem verbundenen Bauteil angebracht (integrative Messung). In beiden Fällen wird der Lichtwellenleiter bevorzugt vorgespannt fixiert, um sowohl Druck- als auch Zugspannungen fehlerfrei messen zu können. Möglich ist es dabei, dass jeder Lichtwellenleiter zur Temperatur- und Dehnungsmessung bis zu ca. 40 Messstellen aufweist. Mit den nunmehr genau gemessenen Temperaturen und Spannungen über eine Vielzahl von Messpunkten kann eine genaue Kompensation der Temperaturdrift des Trägerrahmens erfolgen. Für die Verlegung bzw. Platzierung der Lichtwellenleiter werden gegebenenfalls mehrere Traversen pro Trägerrahmen an demselben angeordnet, die für eine optimale Aufnahme jeweils eines Lichtwellenleiters ausgebildet sind.

Die genaue Erfassung der Temperaturen und Spannungen wird möglich, da erfindungsgemäß der gesamte Spannungszustand über der Fläche des Trägerrahmens in einfacher Weise erfassbar wird. Der Vergleich mit einem FEM-Dehnungsmodell mit den gemessenen Dehnungen erbrachte eine gute Übereinstimmung. Somit kann die Auffederung des Strangführungssegments präzise erfasst werden.
Ein weiteres Ergebnis der Messung per Lichtwellenleiter ist die Erfassung der Verschiebung der Lagerpositionen, an denen die Strangführungsrollen befestigt sind.

Der Dehnungszustand des Segments ist somit in einfacher Weise online erfassbar und liefert die Biegelinie des Bauteils. Jeder Lichtwellenleiter liefert eine Biegelinie. Eine Mehrzahl von Lichtwellenleitern liefert eine Mehrzahl von Biegelinien, die zusammengefasst den Verformungszustand des Bauteils beschreiben.

Somit ergibt sich in vorteilhafter Weise eine dauerfeste Dehnungsmessung, die verglichen mit der vorbekannten Messung per Dehnmessstreifen verbessert ist. Es wird die flächige Erfassung des Spannungszustandes und der Temperaturverteilung mit bis zu 40 Messstellen pro Lichtwellenleiter möglich.

Die Messung per Lichtwellenleiter ist unempfindlich gegenüber elektromagnetischer Strahlung, auch auf langen Strecken (bis zu 1 km) kann die Überwachung problemlos erfolgen. Vorteilhaft ist auch die einfache Integration der Messelemente (Lichtwellenleiter) in das Bauteil, d. h. in den Segmentrahmen.

Die Auffederung des Segmentrahmens kann somit online überwacht werden. Die Auffederung und Weggeberposition beschreiben die Maulweite der Strangführungsrollen. Somit können genaue Ist-Werte als Vorgabe für die Positionsregelung der Strangführungsrollen zugrunde gelegt werden.

Vorteilhaft ist auch eine genaue und einfache Beschreibung und Dokumentation der Lastsituation der Segmente. Überlasten bzw. Steifigkeitsänderungen des gegossenen Stranges beim Durchgang der Sumpfspitze können verbessert erfasst werden. Dabei kann auch die Lage der Achsen der Rollen, die auf dem Segment montiert sind, im Raum verbessert erfasst werden.

Einfacher möglich werden weiterhin die Erkennung eines tordierten Segmentoberrahmens und Ermittlung von Korrekturwerten zum Ausgleich einer ursächlichen Fehlkalibration der Wegmessaufnehmer des Segments.

In der Zeichnung ist ein Ausführungsbeispiel der Erfindung dargestellt. Es zeigen:
- Fig. 1: in der Seitenansicht eine Stranggießanlage,
- Fig. 2: ein Strangführungssegment der Strangführung der Stranggießanlage, nämlich die Einzelheit "X" gemäß Fig. 1,
- Fig. 3: die Ansicht C gemäß Fig. 2 auf den oberen Teil des Strangführungssegments,
- Fig. 4: den Schnitt A-B gemäß Fig. 3 durch das Strangführungssegment, und
- Fig. 5: die Einzelheit "Y" gemäß Fig. 4.

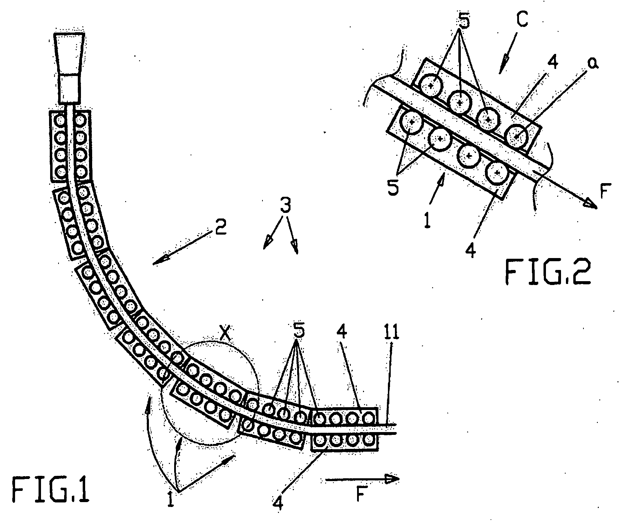

In Fig. 1 ist ein Teil einer Stranggießanlage 3 skizziert, die in bekannter Weise eine Strangführung 2 umfasst, mit der der gegossene Strang - vertikal aus der Kokille austretende - in die Horizontale umgelenkt wird. Die Strangführung 2 wird in bekannter Weise durch eine Anzahl Strangführungssegmente 1 gebildet. Jedes Segment 1 umfasst einen oberen und einen unteren Trägerrahmen 4. In jedem Trägerrahmen 4 sind Strangführungsrollen 5 gelagert, die mit nicht dargestellten Anstellmitteln versehen sind, um in Richtung normal auf die Strangoberfläche angestellt werden zu können. Der Gießstrang 11 wird somit in eine Strangförderrichtung F gefördert.

Ein Strangführungssegment 1 ist in Fig. 2 näher dargestellt. Schematisch ist angedeutet, dass jeweils 4 Strangführungsrollen 5 im oberen Rahmen 4 und im unteren Rahmen 4 angeordnet sind.

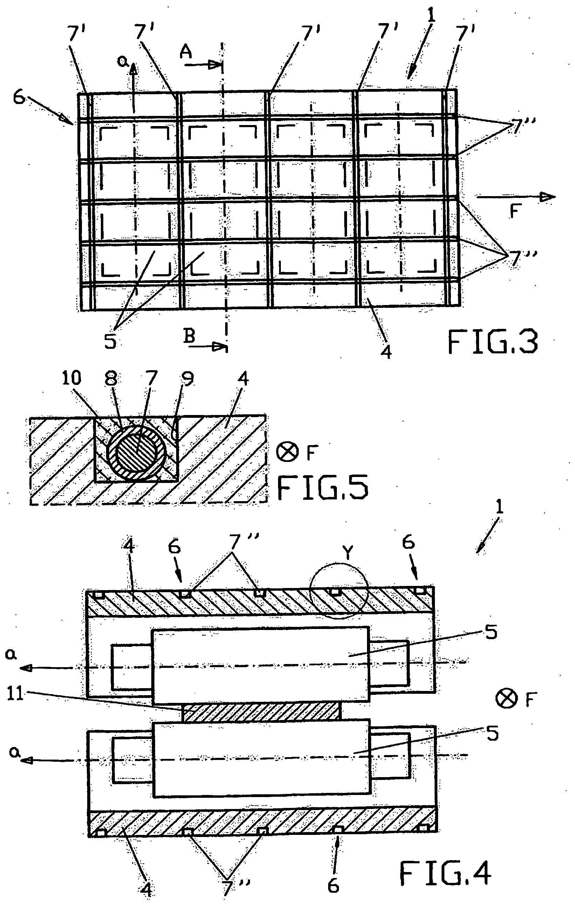

Wird der obere Trägerrahmen 4 aus der Richtung C gemäß Fig. 2 betrachtet - Analoges gilt für den unteren Trägerrahmen 4 -, ergibt sich das Bild, wie es in Fig. 3 dargestellt ist. Es sind Mittel 6 zur Erfassung der Dehnung und der Temperatur
des Trägerahmens 4 vorhanden, die vorliegend eine Anzahl Lichtwellenleiter 7' und 7" umfassen.

Wie aus Fig. 3 in der Zusammenschau mit Fig. 4 ersichtlich ist, sind mehrere Lichtwellenleiter 7' vorgesehen, die sich in Richtung der Achse a der Strangführungsrollen 5 erstrecken, wobei diese im Trägerrahmen 4 - oder in Traversen, die am Trägerrahmen 4 fest angeordnet sind - verlegt sind. Gleichermaßen sind mehrere Lichtwellenleiter 7" im Trägerrahmen 4 verlegt, wobei sich diese in Strangförderrichtung F erstrecken. Demgemäß ergibt sich eine matrixartige Anordnung von Lichtwellenleitern 7', 7", mit der Dehnungen bzw. Temperaturen im Trägerrahmen 4 quasi flächig erfasst werden können. Jeder Lichtwellenleiter 7', 7" kann nämlich bis zu 40 Messstellen aufweisen, so dass ein genaues Bild des Dehnungszustands bzw. der thermischen Belastung des Trägerrahmens 4 erfasst werden kann.

Aus der Detailansicht gemäß Fig. 5 geht hervor, dass in den Trägerrahmen 4 (bzw. alternativ in ein Bauteil, insbesondere eine Traverse, das bzw. die am Trägerrahmen 4 angebracht ist) eine nutförmige Ausnehmung 9 eingearbeitet ist, die eine Querschnittsabmessung von ca. 5 mm x 5 mm aufweist. Die Länge der Ausnehmung 9 umfasst den gesamten Weg des Lichtwellenleiters 7', 7" und seiner Messstellen. Die Lichtwellenleiter 7', 7" sind über Strecken hinweg in einem Hüllrohr angeordnet. Die feste thermische Verankerung des Lichtwellenleiters 7', 7" im Hüllrohr 8 erfolgt durch einen Verguss 10, wie es aus Fig. 5 hervorgeht. Hiernach wird der Lichtwellenleiter 7', 7" im Hüllrohr 8 durch Vergießen mit Epoxidharz oder einem US-aushärtendem Klebstoff in der Ausnehmung 9 fixiert. Abschließend kann eine Versiegelung mit hitzefestem Silikon erfolgen.

Der Lichtwellenleiter 7', 7" hat typischer Weise einen Durchmesser von z. B. 0,12 mm; mit Hüllrohr 8 ergibt sich zumeist ein Durchmesser im Bereich von 0,8 mm bis 2,0 mm.

Der Lichtwellenleiter 7', 7" kann dabei Temperaturen bis zu 800 °C Dauerbelastung aushalten.

Die Lichtwellenleiter 7', 7" sind mit einem nicht dargestellten Temperaturerfassungssystem bzw. einem Erfassungssystem für mechanische Spannungen bzw. Dehnungen verbunden. Mittels des Erfassungssystems wird Laserlicht erzeugt, das in den Lichtwellenleiter 7', 7"eingespeist wird. Die von der Lichtwellenleitfaser 7', 7" gesammelten Daten werden mittels des Erfassungssystems in Temperaturen oder Spannungen umgerechnet und den verschiedenen Messorten zugeordnet.

Die Auswertung kann beispielsweise nach dem sog. Faser-Bragg-Gitter-Verfahren (FBG-Verfahren) erfolgen. Hierbei werden geeignete Lichtwellenleiter verwendet, die Messstellen mit einer periodischen Variation des Brechungsindexes bzw. Gitters mit solchen Variationen eingeprägt bekommen. Diese periodische Variation des Brechungsindexes führt dazu, dass der Lichtwellenleiter in Abhängigkeit der Periodizität für bestimmte Wellenlängen an den Messstellen einen dielektrischen Spiegel darstellt. Durch eine Temperaturänderung an einem Punkt wird die Bragg-Wellenlänge verändert, wobei genau diese reflektiert wird. Licht, das die Bragg-Bedingung nicht erfüllt, wird durch das Bragg-Gitter nicht wesentlich beeinflusst. Die verschiedenen Signale der unterschiedlichen Messstellen können dann aufgrund von Laufzeitunterschieden voneinander unterschieden werden. Der detaillierte Aufbau solcher Faser-Bragg-Gitter sowie die entsprechenden Auswerteeinheiten sind allgemein bekannt. Die Genauigkeit der Ortsauflösung ist durch die Anzahl der eingeprägten Messstellen gegeben. Die Größe einer Messstelle kann beispielsweise im Bereich von 4 mm bis 14 mm liegen.

Alternativ kann zur Messung der Temperatur auch das "Optical-Frequency-Domain-Reflectometry"-Verfahren (OFDR-Verfahren) oder das "Optical-Time-Domain-Reflectometry"-Verfahren (OTDR-Verfahren) eingesetzt werden. Diese Verfahren basieren auf dem Prinzip der faseroptischen Ramanrückstreuung, wobei ausgenutzt wird, dass eine Temperaturveränderung am Punkt eines Lichtleiters eine Veränderung der Ramanrückstreuung des Lichtwellenleitermaterials verursacht. Mittels der Auswerteeinheit (z. B. einem Raman-Reflektometer) können dann die Temperaturwerte entlang einer Faser ortsaufgelöst bestimmt werden, wobei bei diesem Verfahren über eine bestimmte Länge des Leiters gemittelt wird. Diese Länge beträgt ca. einige Zentimeter. Die verschiedenen Messstellen werden wiederum durch Laufzeitunterschiede voneinander getrennt. Der Aufbau solcher Systeme zur Auswertung nach den genannten Verfahren ist allgemein bekannt, ebenso wie die nötigen Laser, die das Laserlicht innerhalb des Lichtwellenleiters erzeugen.

Wie oben erläutert, kann auch eine Regelung der gemessenen Dehnungen im Strangführungssegment vorgesehen werden. Dabei wird der Umstand genutzt, dass mittels der Lichtwellenleiter nicht nur punktuell, sondern über eine Vielzahl an Messstellen hinweg die aktuelle Dehnung bzw. Spannung ermittelt und an eine Steuerungseinrichtung (Regeleinrichtung) geleitet werden kann.

Durch die Betätigung einer Anzahl von Stellelementen (bevorzugt hydraulische Kolben-Zylinder-Elemente) kann auf das Strangführungssegment und/oder auf eine Strangführungsrolle eine Kraft ausgeübt werden, die wiederum die Dehnung im Strangführungssegment beeinflusst. Ein geeigneter Regelalgorithmus gibt dann aufgrund der ermittelten Regelabweichung Steuerdaten für die Stellelemente vor, so dass die Dehnung im Strangführungssegment in einem optimalen Bereich bleibt und insbesondere Belastungsspitzen vermieden werden.

Die festgestellte Regelabweichung liefert eine Aussage über die aktuelle Belastung bzw. die aktuelle Kräfteverteilung im Strangführungssegment.

### Bezugszeichenliste:

- 1: Strangführungssegment
- 2: Strangführung
- 3: Stranggießanlage
- 4: Trägerrahmen
- 5: Strangführungsrolle
- 6: Mittel zur Erfassung der Dehnung und/oder Temperatur
- 7: Lichtwellenleiter
- 7': Lichtwellenleiter
- 7": Lichtwellenleiter
- 8: Hüllrohr
- 9: nutförmige Ausnehmung
- 10: Verguss
- 11: Gießstrang

- a: Achse der Strangführungsrolle
- F: Strangförderrichtrung

## Patentansprüche

1. Strangführungssegment (1) einer Strangführung (2) einer Stranggießanlage (3), wobei das Strangführungssegment (1) einen Trägerrahmen (4) aufweist, in dem eine Anzahl Strangführungsrollen (5) gelagert ist, wobei in dem Trägerrahmen (4) Mittel (6) zur Erfassung der Dehnung und/oder der Temperatur des Trägerrahmens (4) angeordnet sind,
**dadurch gekennzeichnet,**
**dass** die Mittel (6) zur Erfassung der Dehnung und/oder der Temperatur des Trägerrahmens (4) mehrere Lichtwellenleiter (7'), die in Richtung der Achse (a) der Strangführungsrollen (5) im Trägerrahmen (4) angeordnet und in Strangförderrichtrung (F) voneinander vorzugsweise äquidistant beabstandet sind, und mehrere Lichtwellenleiter (7"), die in Strangförderrichtung (F) im Trägerrahmen (4) angeordnet und in Richtung der Achse (a) der Strangführungsrollen (5) voneinander vorzugsweise äquidistant beabstandet sind, umfasst, wobei die Anzahl Lichtwellenleiter (7', 7") im Trägerrahmen (4) matrixartig angeordnet sind.

2. Strangführungssegment nach Anspruch 1, **dadurch gekennzeichnet, dass** der Lichtwellenleiter (7', 7") zur Messung der Temperatur zumindest abschnittsweise lose / locker in einem Hüllrohr (8) verlegt angeordnet ist, wobei das Hüllrohr (8) im Trägerrahmen (4) festgelegt ist.

3. Strangführungssegment nach Anspruch 2, **dadurch gekennzeichnet, dass** das Hüllrohr (8) in einer nutförmigen Ausnehmung (9) im Trägerrahmen (4) angeordnet ist.

4. Strangführungssegment nach Anspruch 3, **dadurch gekennzeichnet, dass** die Festlegung des Hüllrohrs (8) in der nutförmigen Ausnehmung (9) durch einen Verguss (10) mit einem Harzmaterial oder Klebstoff bewerkstelligt ist, insbesondere mit Epoxidharz oder UV-aushärtendem Klebstoff, wobei das Harzmaterial oder der Klebstoff vorzugsweise mit einem hitzebeständigem Silikonmaterial versiegelt ist.

5. Strangführungssegment nach einem der Ansprüche 1 bis 4, **dadurch gekennzeichnet, dass** der Lichtwellenleiter (7) zur Messung einer Ist-Dehnung des Trägerrahmens (4) zumindest abschnittsweise direkt mit dem Trägerrahmen (4) oder einem am Trägerrahmen (4) befestigten Bauteil verbunden ist.

6. Strangführungssegment nach Anspruch 5, **dadurch gekennzeichnet, dass** der Lichtwellenleiter (7) an zwei beabstandeten Stellen direkt mit dem Trägerrahmen (4) oder dem am Trägerrahmen (4) befestigten Bauteil verbunden ist, wobei die beiden Stellen vorzugsweise in einem Abstand zwischen 1 cm und 1 m angeordnet sind.

7. Strangführungssegment nach Anspruch 5 oder 6, **dadurch gekennzeichnet, dass** der Lichtwellenleiter (7) am Trägerrahmen (4) oder an dem am Trägerrahmen (4) befestigten Bauteil in vorgespanntem Zustand befestigt ist.

8. Strangführungssegment nach einem der vorangegangenen Ansprüche,
**gekennzeichnet durch** eine Regelungseinrichtung, welche ausgebildet ist, eine erfasste Ist-Dehnung des Lichtwellenleiters, welche eine Ist-Biegung des Strangführungssegmentes repräsentiert, mit einer vorgegebenen Soll-Dehnung des Lichtwellenleiters, welche eine Soll-Biegung des Strangführungssegmentes repräsentiert, zu vergleichen, und nach Maßgabe der aus diesem Vergleich resultierenden Regelabweichung ein Stellglied der Strangführungseinrichtung derart anzusteuern, dass die Regelabweichung möglichst zu Null wird.

9. Strangführungssegment nach Anspruch 8, **dadurch gekennzeichnet, dass** es sich bei dem Stellglied um einen Stellzylinder handelt, mit welchem eine der Strangführungsrollen oder der Tragrahmen des Strangführungssegmentes angestellt wird.

10. Verfahren zum Betreiben eines Strangführungssegments (1) einer Strangführung (2) einer Stranggießanlage (3), wobei das Strangführungssegment (1) einen Trägerrahmen (4) aufweist, in dem eine Anzahl Strangführungsrollen (5) gelagert ist, wobei in dem Trägerrahmen (4) Mittel (6) zur Erfassung der Dehnung des Trägerrahmens (4) angeordnet sind, wobei mindestens ein Stellelement, insbesondere ein hydraulisches Kolben-Zylinder-Element, am Trägerrahmen (4) und/oder an einer Strangführungsrolle (5) angreift, um eine äußere Kraft auf den Trägerrahmen und/oder auf die Strangführungsrolle (5) auszuüben,
**dadurch gekennzeichnet,**
**dass** die Mittel (6) zur Erfassung der Dehnung des Trägerrahmens (4) mehrere in oder am Trägerrahmen (4) angeordnete Lichtwellenleiter (7', 7") umfassen, die sich in Richtung der Achse (a) der Strangführungsrolle (5) bzw. senkrecht hierzu in Strangförderrichtung (F) erstrecken und miteinander eine matrixartige Anordnung von Lichtwellenleitern (7', 7") bilden,
**dass** eine Vielzahl von Stellelementen, insbesondere mindestens drei Stellelemente, vorgesehen sind, die an verschiedenen Orten des Strangführungssegments (1) angreifen, wobei durch die Lichtwellenleiter (7) die Dehnungen des Trägerrahmens (4) am Ort des Angriffs der Stellelemente ermittelt werden,
und
wobei das Verfahren die Schritte aufweist:
a) Messen der Dehnung des Trägerrahmens (4) an einer Anzahl Stellen des Trägerrahmens (4) mittels des Lichtwellenleiters (7) und Zuleitung der gemessenen Werte an eine Regeleinrichtung;
b) Vergleich der gemessenen Werte der Dehnung mit in der Regeleinrichtung gespeicherten Werten und Ermittlung einer Abweichung zwischen gemessenen und gespeicherten Werten;
c) Ansteuern des mindestens einen Stellelements durch die Regeleinrichtung, so dass die ermittelte Abweichung vermindert wird.

11. Verfahren nach Anspruch 10, **dadurch gekennzeichnet, dass** die Schritte a) bis c) von Anspruch 10 wiederholt werden, bis die ermittelte Abweichung unter einem vorgegebenen Höchstwert liegt.

12. Verfahren nach Anspruch 10 oder 11, **dadurch gekennzeichnet, dass** die Regelung der Stellelemente durch die Regeleinrichtung so erfolgt, dass alle Dehnungen an den Stellen des Angriffs der Stellelemente unter einem vorgegebenen Höchstwert liegen.

## Claims

1. Strip guide segment (1) of a strip guide (2) of a continuous casting plant (3), wherein the strip guide segment (1) comprises a support frame (4) in which a plurality of strip guide rollers (5) is mounted, wherein means (6) for detecting the expansion and/or temperature of the support frame (4) are arranged in the support frame (4),
**characterised in that**
the means (6) for detecting the expansion and/or temperature of the support frame (4) comprise several optical waveguides (7') which are arranged in the support frame (4) in the direction of the axis (a) of the strip guide rollers (5) and are spaced, preferably equidistantly, from one another in strip conveying direction (F) and several optical waveguides (7") which are arranged in the support frame (4) in strip conveying direction (F) and are spaced, preferably equidistantly, from one another in the direction of the axis (a) of the strip guide rollers (5), wherein the optical waveguides (7', 7") are arranged in matrix form in the support frame (4).

2. Strip guide segment according to claim 1, **characterised in that** the optical waveguides (7', 7") for measuring the temperature are arranged to be placed at least in a section loosely/freely in an encasing tube (8), wherein the encasing tube (8) is fixed in the support frame (4).

3. Strip guide segment according to claim 2, **characterised in that** the encasing tube (8) is arranged in a groove-shaped recess (9) in the support frame (4).

4. Strip guide segment according to claim 3, **characterised in that** the fixing of the encasing tube (8) in the groove-shaped recess (9) is effected by a casting material (10) with a resin or an adhesive, particularly with epoxy resin or with adhesive hardening under ultraviolet light, wherein the resin or adhesive is preferably sealed by a heat-resistant silicon material.

5. Strip guide segment according to any one of claims 1 to 4, **characterised in that** the optical waveguide (7) for measuring an actual expansion of the support frame (4) is connected at least in a section directly with the support frame (4) or with a component attached to the support frame (4).

6. Strip guide segment according to claim 5, **characterised in that** the optical waveguide (7) is directly connected at two spaced locations with the support frame (4) or with the component attached to the support frame (4), wherein the two locations are preferably arranged at a spacing of between 1 centimetre and 1 metre.

7. Strip guide segment according to claim 5 or 6, **characterised in that** the optical waveguide (7) is fastened in a biased state to the support frame (4) or to the component attached to the support frame (4).

8. Strip guide segment according to any one of the preceding claims, **characterised by** a regulating device which is constructed to compare a detected actual expansion of the optical waveguide, which represents an actual bending of the strip guide segment, with a predetermined target expansion of the optical waveguide, which represents a target bending of the strip guide segment, and to so control a setting element of the strip guide device in dependence on the regulating difference resulting from this comparison that the regulating difference is, as fas as possible, zero.

9. Strip guide segment according to claim 8, **characterised in that** the setting element is a setting cylinder by which one of the strip guide rollers or the support frame of the strip guide segment is adjusted.

10. Method of operating a strip guide segment (1) of a strip guide (2) of a continuous casting plant (3), wherein the strip guide segment (1) comprises a support frame (4) in which a plurality of strip guide rollers (5) is mounted, wherein means (6) for detecting the expansion of the support frame (4) are arranged in the support frame (4) and wherein at least one setting element, particularly a hydraulic piston/cylinder element, acts on the support frame (4) and/or on a strip guide roller (5) so as to exert an external force on the support frame and/or on the strip guide roller (5),
**characterised In that**
the means (6) for detecting the expansion of the strip guide frame (4) comprise several optical waveguides (7') which are arranged in or on the support frame (4) and extend in the direction of the axis (a) of the strip guide roller (5) or perpendicularly thereto in strip conveying direction (F) and which together form a matrix-like arrangement of optical waveguides (7', 7"), and
a plurality of setting elements, particularly at least three setting elements, is provided, which setting elements act at different locations of the strip guide segment (1), wherein the expansions of the support frame (4) are detected by the optical waveguide (7) at the location of the action of the setting elements,
wherein the method comprises the steps:
a) measuring the expansion of the support frame (4) at a number of places of the support frame (4) by means of the optical waveguide (7) and delivering the measured values to a regulating device;
b) comparing the measured values of the expansion with values stored in the regulating device and determining a difference between the measured and stored values; and
c) controlling the at least one setting element by the regulating device so that the determined difference is reduced.

11. Method according to claim 10, **characterised in that** the steps a) to c) of claim 10 are repeated until the determined difference lies below a predetermined maximum value.

12. Method according to claim 10 or 11, **characterised in that** the regulation of the setting elements by the regulating device is carried out in such a way that all expansions at the locations of the action of the setting elements lie below a predetermined maximum value.

## Revendications

1. Segment de guidage de barre (1) d'un guidage de barre (2) d'une installation de coulée continue (3), le segment de guidage de barre (1) présentant un cadre de support (4) dans lequel est montée une série de rouleaux de guidage de barres (5), des moyens (6) pour enregistrer la déformation relative et/ou la température du cadre de support (4) étant disposés dans le cadre de support (4), **caractérisé en ce que** les moyens (6) pour enregistrer la déformation relative et/ou la température du cadre de support (4) comprennent plusieurs câbles à fibres optiques (7') qui sont disposés dans le cadre de support (4) dans la direction de l'axe (a) des rouleaux de guidage de barres (5) et qui sont espacés les uns des autres de préférence de manière équidistante dans la direction de transport des barres (F) et plusieurs câbles à fibres optiques (7") qui sont disposés dans le cadre de support (4) dans la direction de transport des barres (F) et qui sont espacés les uns des autres de préférence de manière équidistante dans la direction de l'axe (a) des rouleaux de guidage de barres (5), lesdits plusieurs câbles à fibres optiques (7', 7") étant disposés dans le cadre de support (4) selon un agencement matriciel.

2. Segment de guidage de barre selon la revendication 1, **caractérisé en ce que** le câble à fibres optiques (7', 7") pour la mesure de la température est disposé en étant posé de manière lâche/desserrée au moins par tronçons dans un tube de gainage (8), le tube de gainage (8) étant fixé dans le cadre de support (4).

3. Segment de guidage de barre selon la revendication 2, **caractérisé en ce que** le tube de gainage (8) est disposé dans le cadre de support (4) dans un évidement (9) en forme de rainure.

4. Segment de guidage de barre selon la revendication 3, **caractérisé en ce que** la fixation du tube de gainage (8) dans l'évidement (9) en forme de rainure est mise en oeuvre via un remplissage (10) avec une matière résineuse ou un adhésif, en particulier avec une résine époxyde ou un adhésif du type à durcissement par exposition au rayonnement ultraviolet, la matière résineuse ou l'adhésif étant de préférence scellé avec une matière à base de silicone, résistant à la chaleur.

5. Segment de guidage de barre selon l'une quelconque des revendications 1 à 4, **caractérisé en ce que** le câble à fibres optiques (7) pour la mesure d'une déformation relative réelle du cadre de transport (4) est relié au moins par tronçons directement au cadre de support (4) ou à un composant fixé au cadre de support (4).

6. Segment de guidage de barre selon la revendication 5, **caractérisé en ce que** le câble à fibres optiques (7) est relié à deux endroits distants directement au cadre de support (4) ou au composant fixé au cadre de support (4), les deux endroits étant disposés de préférence à une distance qui se situe entre 1 cm et 1 m.

7. Segment de guidage de barre selon la revendication 5 ou 6, **caractérisé en ce que** le câble à fibres optiques (7) est fixé au cadre de support (4) ou au composant fixé au cadre de support (4) en état de précontrainte.

8. Segment de guidage de barre selon l'une quelconque des revendications précédentes, **caractérisé en ce que**, grâce à un mécanisme de réglage qui est réalisé pour comparer une déformation relative réelle enregistrée du câble à fibres optiques, qui représente un fléchissement réel du segment de guidage de barre, à une déformation relative de consigne prédéfinie du câble à fibres optiques, qui représente un fléchissement de consigne du segment de guidage de barre, et pour activer, sur base de l'écart de réglage résultant de cette comparaison, un élément de positionnement du mécanisme de guidage de barre de façon à rapprocher l'écart de réglage le plus possible de la valeur zéro.

9. Segment de guidage de barre selon la revendication 8, **caractérisé en ce que**, en ce qui concerne l'élément de positionnement, il s'agit d'un cylindre de positionnement avec lequel on positionne un des rouleaux de guidage de barre ou le cadre de support du segment de guidage de barre.

10. Procédé pour la commande d'un segment de guidage de barre (1) d'un guidage de barre (2) d'une installation de coulée continue (3), le segment de guidage de barre (1) présentant un cadre de support (4) dans lequel est montée une série de rouleaux de guidage de barres (5), des moyens (6) pour enregistrer la déformation relative du cadre de support (4) étant disposés dans le cadre de support (4), au moins un élément de positionnement, en particulier un élément hydraulique du type à piston-cylindre, entrant en contact avec le cadre de support (4) et/ou avec un rouleau de guidage de barre (5) pour appliquer une force externe sur le cadre de support et/ou sur le rouleau de guidage de barre (5), **caractérisé en ce que** : les moyens (6) pour enregistrer la déformation relative du cadre de support (4) comprennent plusieurs câbles à fibres optiques (7', 7") disposés dans ou sur le cadre de support (4), qui s'étendent dans la direction de l'axe (a) du rouleau de guidage de barre (5), respectivement perpendiculairement à l'axe en question dans la direction de transport de la barre (F) et qui forment les uns avec les autres un agencement matriciel de câbles à fibres optiques (7', 7") ; **en ce qu'**on prévoit un certain nombre d'éléments de positionnement, en particulier au moins trois éléments de positionnement, qui viennent se disposer à différents endroits du segment de guidage de barre (1), les déformations relatives du cadre de support (4) à l'endroit d'application des éléments de positionnement étant déterminées par les câbles à fibres optiques (7) ; et le procédé présentant les étapes dans lesquelles :
a) on mesure la déformation relative du cadre de support (4) à plusieurs endroits du cadre de support (4) au moyen du câble à fibre optique (7) et on transmet les valeurs mesurées à un mécanisme de réglage;
b) on compare les valeurs mesurées de la déformation relative à des valeurs enregistrées dans le mécanisme de réglage et on détermine une déviation entre les valeurs mesurées et les valeurs enregistrées ;
c) on actionne ledit au moins un élément de positionnement via le mécanisme de réglage d'une manière telle que l'on réduit la déviation déterminée

11. Procédé selon la revendication 10, **caractérisé en ce qu'**on répète les étapes a) à c) selon la revendication 10, jusqu'à ce que la déviation déterminée se retrouve en dessous d'une valeur maximale prédéfinie.

12. Procédé selon la revendication 10 ou 11, **caractérisé en ce que** le réglage des éléments de positionnement via le mécanisme de réglage a lieu d'une manière telle que toutes les déformations relatives aux endroits de l'application des éléments de positionnement sont inférieures à une valeur maximale prédéfinie.
